# EUROPEAN PATENT APPLICATION

(11) **EP 3 059 650 A1**
(43) Date of publication of application: **24.08.2016**
(21) Application number: 16154158.6
(22) Date of filing: 04.02.2016
(51) Int. Cl.: G05D 1/02, B60K 31/00, G01S 17/93

(54) **MOVABLE OBJECT CONTROLLER AND METHOD FOR CONTROLLING MOVABLE OBJECT**

(30) Priority: 17.02.2015 JP 2015028975
(71) Applicant: Kabushiki Kaisha Yaskawa Denki, Kitakyushu-shi, Fukuoka 806-0004 (JP)
(72) Inventor: SHIKINA, Taku, Kitakyushu-shi, Fukuoka 806-0004 (JP); NAKAMURA, Tamino, Kitakyushu-shi, Fukuoka 806-0004 (JP); KONO, Dai, Kitakyushu-shi, Fukuoka 806-0004 (JP); NISHIMURA, Takashi, Kitakyushu-shi, Fukuoka 806-0004 (JP)
(74) Representative: Grünecker Patent- und Rechtsanwälte PartG mbB

(57) **Abstract**

A movable object controller includes a speed controller and a region changer. The speed controller is configured to control a speed of a movable object based on whether an obstacle is in a monitor region. The region changer is configured to change a size of the monitor region based on the speed of the movable object.

## Description

### BACKGROUND

### FIELD OF THE INVENTION

The present invention relates to a movable object controller and a method for controlling a movable object.

### DISCUSSION OF THE BACKGROUND

Japanese Unexamined Patent Application Publication No. 2010-67144 discloses a movable object system that uses a movable object to perform predetermined kind of work such as conveying a workpiece using a conveyor.

Specifically, the movable object system causes the movable object to move, successively determines whether an obstacle is in the forward course of movement of the movable object, and controls the speed of the movable object based on the determination.

In the movable object system, an image sensor successively picks up images of the forward course of movement of the movable object, and a movable object controller sets a plurality of detection regions in each of the images. The plurality of detection regions respectively correspond to predetermined distances (collision imaginary distances) from the front of the movable object. When an obstacle that has a possibility of collision is in any of the detection regions, the movable object controller decelerates or stops the movable object in accordance with the collision imaginary distance corresponding to the detection region.

The contents of Japanese Unexamined Patent Application Publication No. 2010-67144 are incorporated herein by reference in their entirety.

The movable object system disclosed in Japanese Unexamined Patent Application Publication No. 2010-67144 leaves room for improvement in shortening the tact time while moving the movable object at speeds that accord with the environment surrounding the movable object. For example, if one obstacle stays on in any of the detection regions, the movable object system would possibly keep the movable object at low speed unnecessarily.

One aspect of an embodiment has been made in view of the above-described circumstances, and it is an object of the present disclosure to provide a movable object controller and a method for controlling a movable object that shorten the tact time while moving the movable object at speeds that accord with the environment surrounding the movable object.

### SUMMARY

According to one aspect of the present disclosure, a movable object controller includes a speed controller and a region changer. The speed controller is configured to control a speed of a movable object based on whether an obstacle is in a monitor region. The region changer is configured to change a size of the monitor region based on the speed of the movable object.

The one aspect of the embodiment shortens the tact time while moving the movable object at speeds that accord with the environment surrounding the movable object.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1A is a schematic perspective view of a self-movable carriage according to an embodiment;
FIG. 1B is a schematic bottom view of the self-movable carriage according to the embodiment;
FIG. 2A is a first schematic plan outlining a method for detecting an obstacle according to the embodiment;
FIG. 2B is a second schematic plan outlining the method for detecting an obstacle according to the embodiment;
FIG. 2C illustrates a first example of a monitor region according to the embodiment;
FIG. 2D illustrates a second example of the monitor region according to the embodiment;
FIG. 2E illustrates a third example of the monitor region according to the embodiment;
FIG. 3 is a block diagram of the self-movable carriage according to the embodiment;
FIG. 4 illustrates an example of monitor region information;
FIG. 5A is a first illustration of size change of the monitor region and speed control.
FIG. 5B is a second illustration of the size change of the monitor region and the speed control;
FIG. 5C is a third illustration of the size change of the monitor region and the speed control;
FIG. 5D is a fourth illustration of the size change of the monitor region and the speed control; and
FIG. 6 is a flowchart of a procedure for processing performed by a controller according to this embodiment.

### DESCRIPTION OF THE EMBODIMENTS

A movable object controller and a method for controlling a movable object according to embodiments will be described in detail below by referring to the accompanying drawings. It is noted that the following embodiments are provided for exemplary purposes only and are not intended for limiting purposes.

In the following embodiments, a self-movable type carriage (hereinafter referred to as "self-movable carriage") for robot use is used a non-limiting example of the movable object. Other non-limiting examples of the movable object include AGVs (Automated Guided Vehicles).

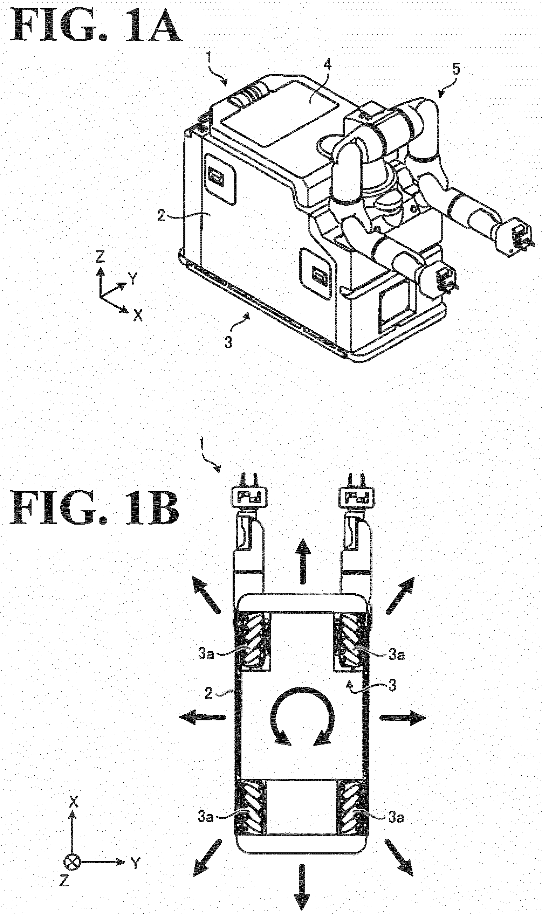

First, a configuration of a self-movable carriage 1 according to an embodiment will be described by referring to FIGs. 1A and 1B. FIG. 1A is a schematic perspective view of the self-movable carriage 1 according to this embodiment. FIG. 1B is a schematic bottom view of the self-movable carriage 1 according to this embodiment.

For ease of description, FIGs. 1A and 1B each illustrate a three-dimensional orthogonal coordinate system including a Z axis with its vertically upward direction being assumed the positive direction. This orthogonal coordinate system may also be illustrated in some other drawings referred to in the following description.

The self-movable carriage 1 according to this embodiment is a self-movable carriage for a robot used in handling work. As illustrated in FIG. 1A, the self-movable carriage 1 includes a movable portion 2, a motion mechanism 3, and a platform 4. The movable portion 2 accommodates a controller 20 (movable object controller), described later.

A robot 5 is mounted on the movable portion 2. A non-limiting example of the robot 5 is a two-arm multi-articular robot as illustrated in FIG. 1A. On the distal end of each of the two arms, an end effector is mounted.

The robot 5 performs a predetermined kind of handling work and takes articles to and from the platform 4 while controlling the positions and postures of the end effectors by making multi-articular motions.

The motion mechanism 3 moves the robot 5 to a predetermined destination together with the articles on the platform 4. As illustrated in FIG. 1B, the motion mechanism 3 includes a plurality of omni-directional wheels 3a. By controlling which combination of the omni-directional wheels 3a to rotate, the self-movable carriage 1 is able to make omni-directional movements, such as in frontward and rearward directions, right and left directions, and in diagonal directions, and make rotational movements about any vertical axis. Examples of the omni-directional wheels 3a include, but are not limited to, Mecanum wheels and Omni wheels (registered trademark).

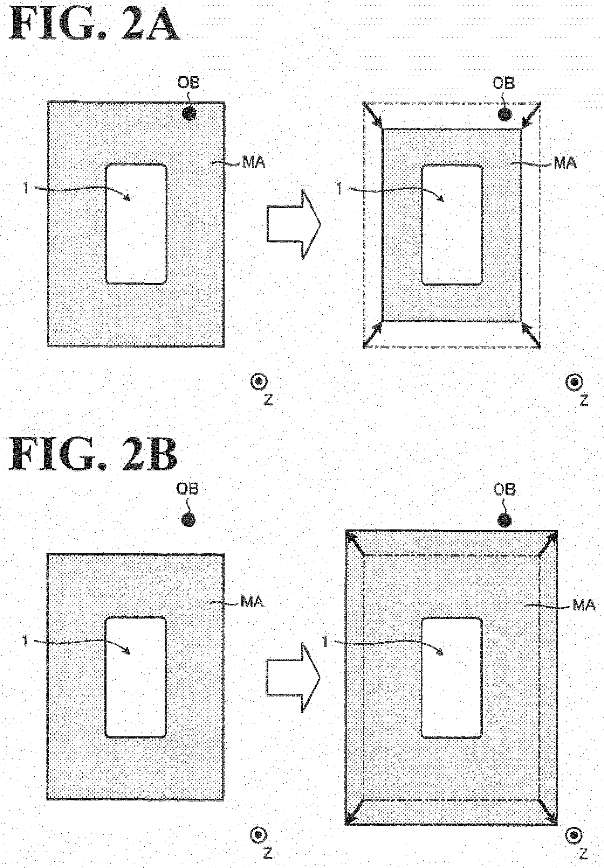

Next, a method for detecting an obstacle according to an embodiment will be outlined by referring to FIGs. 2A and 2B. FIGs. 2A and 2B are respectively a first schematic plan and a second schematic plan outlining the method for detecting an obstacle according to this embodiment.

First, description will be made with regard to a method according to a comparative example, not illustrated, for detecting an obstacle. A known method for detecting an obstacle in moving movable objects such as the self-movable carriage 1 is to set a monitor region around the movable object for a laser scanner or a similar device to monitor, and to decelerate or stop the movable object in the monitor region when the laser scanner detects an obstacle in the monitor region.

This method, however, has only two options, namely, causing the movable object to travel at lower speed or to stop, regardless of whether the detected obstacle is at a substantial distance from the movable object in the monitor region. This situation is attributable to use of a fixed monitor region.

Thus, the method according to a comparative example for detecting an obstacle involves unnecessary low-speed travel or stopping of the movable object in the monitor region. This can make it difficult to shorten the tact time.

In view of this situation, this embodiment dynamically changes the monitor region in accordance with the environment surrounding the movable object. For example, in the embodiment illustrated in FIG. 2A, the left picture is a monitor region MA set around the self-movable carriage 1. When an obstacle OB is detected in the monitor region MA, the self-movable carriage 1 is decelerated and the size of the monitor region MA is reduced as represented by the right picture of FIG. 2A.

In the embodiment illustrated in FIG. 2A, when the obstacle OB is detected, the monitor region MA is reduced to a size not containing the obstacle OB. The reduction in size eliminates the need for decelerating the self-movable carriage 1 in the monitor region MA to a speed as low as the comparative example requires. That is, this embodiment enables the self-movable carriage 1 to travel at speeds that accord with the surrounding environment. This configuration contributes to the shortening of the tact time.

Also in this embodiment, when no obstacle OB is detected in the monitor region MA as represented by the left picture of FIG. 2B, the size of the monitor region MA is increased as represented by the right picture of FIG. 2B.

In the embodiment illustrated in FIG. 2B, when no obstacle OB is detected, the increased size of the monitor region MA is maintained at least until the obstacle OB is detected. Maintaining the increased size allows the self-movable carriage 1 to be accelerated to a speed corresponding to the increased monitor region MA. That is, this embodiment enables the self-movable carriage 1 to travel at speeds that accord with the surrounding environment. This configuration contributes to the shortening of the tact time.

While in FIGs. 2A and 2B the size of the monitor region MA is changed, another possible embodiment is to dynamically change the shape of the monitor region MA. While in FIGs. 2A and 2B the monitor region MA has a rectangular shape, this should not be construed as limiting the shape of the monitor region MA.

As illustrated in FIGs. 2A and 2B, dynamically changing the monitor region MA may involve precise and quick switch between reduction and increase of the size of the monitor region MA in the vicinity of the obstacle OB. In view of this situation, this embodiment provides a region that can be referred to as "dead zone" on the circumference of the monitor region MA, in addition to dynamically changing the monitor region MA in accordance with the surrounding environment.

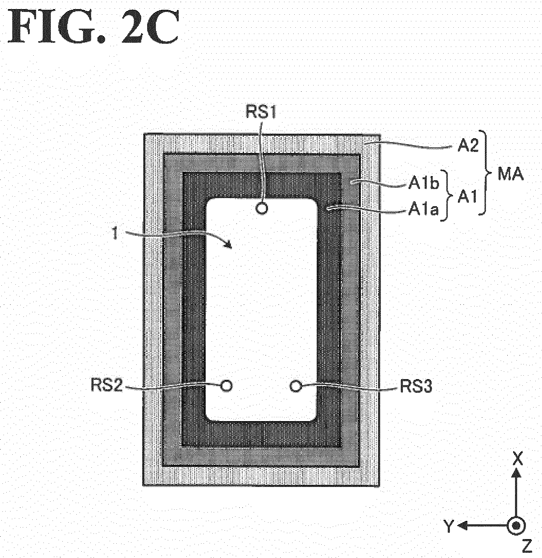

This will be described in detail below by referring to FIGs. 2C to 2E. FIGs. 2C to 2E illustrate first to third examples of the monitor region MA according to this embodiment. As illustrated in FIG. 2C, in this embodiment, a first region A1 and a second region A2 are arranged in proximity order from the self-movable carriage 1. The first region A1 is a target region where speed control is performed, and the second region A2 turns into a dead zone.

As used herein, the term "target region where speed control is performed" refers to a region where at least the self-movable carriage 1 is subjected to speed control, which includes stopping, deceleration, and acceleration. As illustrated in FIG. 2C, in the first region A1, a stopping region A1a and a deceleration region A1b are arranged in proximity order from the self-movable carriage 1.

The stopping region A1a is a region where the speed control is control of stopping the self-movable carriage 1 when the obstacle OB is in the stopping region A1a. The deceleration region A1b is a region where the speed control is control of decelerating the self-movable carriage 1 when the obstacle OB is in the deceleration region A1b (or accelerating the self-movable carriage 1 when no obstacle OB exists).

As used herein, the term "turn into a dead zone" means that a region turns into a zone where the control of the self-movable carriage 1 is to maintain the speed of the self-movable carriage 1. That is, the second region A2 is a region where the speed of the self-movable carriage 1 is maintained when the obstacle OB is in the second region A2. The second region A2 will be hereinafter occasionally referred to as "maintaining region A2".

By arranging the maintaining region A2, which turns into a dead zone, on the circumference of the monitor region MA, this embodiment eliminates or minimizes chattering-like fluctuation of the speed of the self-movable carriage 1 at the time of precise and quick switch between reduction and increase of the size of the monitor region MA.

Thus, in this embodiment, the monitor region MA has such a shape that the self-movable carriage 1 is at the center of the monitor region MA and surrounded by the stopping region A1a, the deceleration region A1b, and the maintaining region A2 in this order. That is, this embodiment sets the omni-directional monitor region MA, leaving no blind spots, for the self-movable carriage 1, which is capable of making omni-directional movements realized by the omni-directional wheels 3a. This configuration ensures safety in the travel of the self-movable carriage 1 in accordance with the surrounding environment. This configuration also contributes to the shortening of the tact time.

The monitor region MA is formed using a laser scanner RS, which is equipped in the self-movable carriage 1.

The laser scanner RS is provided in plural and thus capable of detecting obstacles in omni-directions of the self-movable carriage 1, which is capable of making omni-directional movements. In this embodiment, three laser scanners RS1 to RS3 are provided as illustrated in FIG. 2C.

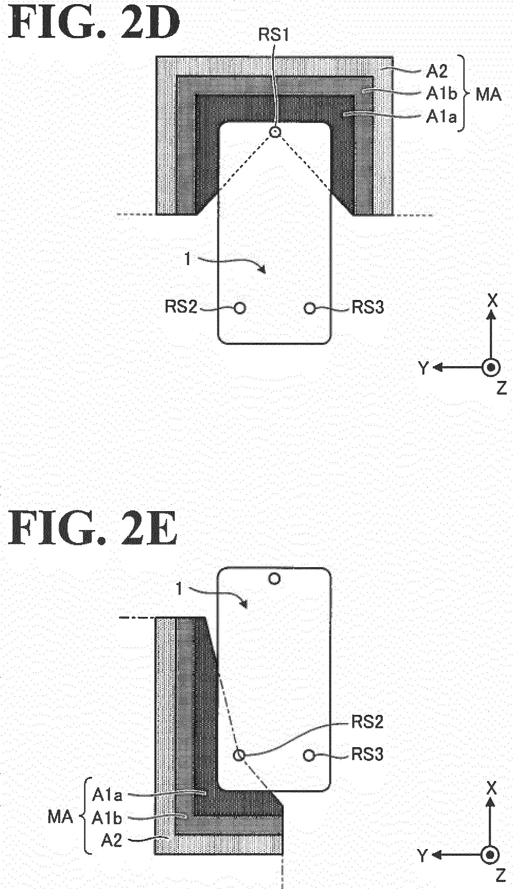

Specifically, the laser scanner RS1 forms, for example, a region indicated by the shaded portions of the monitor region MA illustrated in FIG. 2D. The formation depends on the position at which this laser scanner is arranged and on the shape of the self-movable carriage 1.

The laser scanner RS2 forms, for example, a region indicated by the shaded portions of the monitor region MA illustrated in FIG. 2E. The formation depends on the position at which this laser scanner is arranged and on the shape of the self-movable carriage 1. The region formed by the laser scanner RS2 and the region formed by the laser scanner RS3 are a left-right symmetry, and therefore description of the region formed by the laser scanner RS3 will not be elaborated.

Then, the regions formed by the laser scanners RS1 to RS3 are combined into the monitor region MA, which covers omni-directions of the self-movable carriage 1.

In this embodiment, the laser scanners RS1 to RS3 are of binary output type. This is because being of binary output type enables binary determination of ON/OFF as to whether the obstacle OB exists, eliminating the need for more complicated and higher-load processing such as image analysis. Thus, being of binary output type facilitates detection of the obstacle OB. Moreover, generally, more binary output-type sensors comply with safety standards than sensors of other types do.

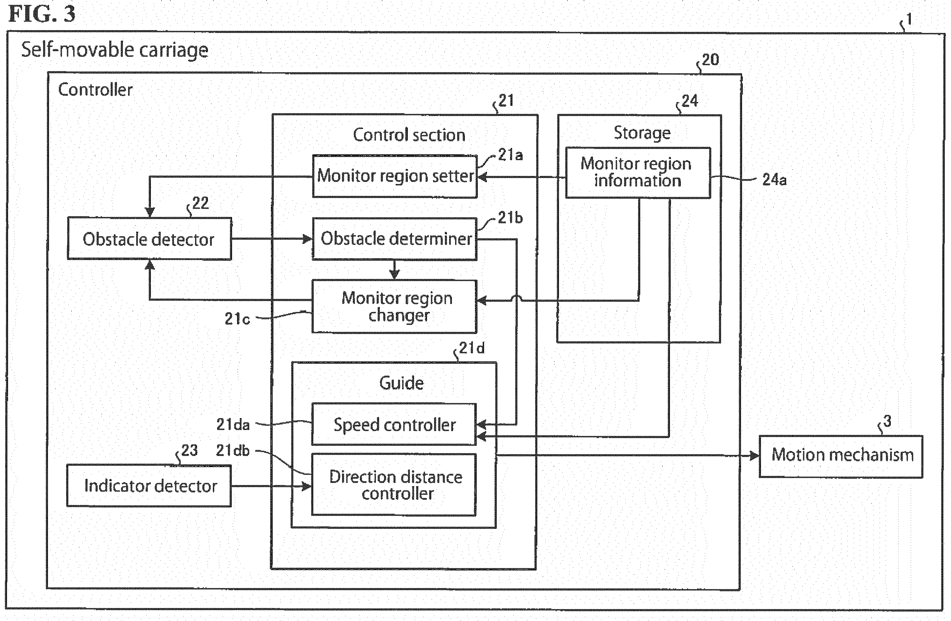

Next, a block configuration of the self-movable carriage 1 according to this embodiment will be described by referring to FIG. 3. FIG. 3 is a block diagram of the self-movable carriage 1 according to this embodiment. It is noted that FIG. 3 only shows those components necessary for description of the self-movable carriage 1, omitting those components of general nature.

The following description by referring to FIG. 3 will mainly focus on the internal configuration of the controller 20, and may occasionally simplify or omit the components that have been already described.

As illustrated in FIG. 3, the controller 20 includes a control section 21, an obstacle detector 22, an indicator detector 23, and a storage 24. The control section 21 includes a monitor region setter 21 a, an obstacle determiner 21 b, a monitor region changer 21 c, and a guide 21d. The guide 21 d includes a speed controller 21da and a direction distance controller 21db.

The storage 24 is a storage device such as a hard disc drive and a nonvolatile memory, and stores monitor region information 24a.

It is noted that not all the components of the controller 20 illustrated in FIG. 3 may necessarily be disposed in the controller 20. A possible example is that the obstacle detector 22 holds the monitor region information 24a, which is otherwise stored in the storage 24. Another possible example is that the monitor region information 24a is stored in an upper-level device upper than the controller 20, and obtained by the controller 20, when necessary, from the upper-level device wirelessly or through any other manner of communication. While in FIG. 3 the controller 20 is disposed inside the self-movable carriage 1, the controller 20 may be disposed outside the self-movable carriage 1.

A non-limiting example of the control section 21 is a Central Processing Unit (CPU) that is in charge of overall control of the controller 20. The obstacle detector 22 is a detector that includes the laser scanners RS1 to RS3 and that forms the monitor region MA based on instructions from the monitor region setter 21a and the monitor region changer 21 c. The obstacle detector 22 scans the inside of the monitor region MA to determine whether the obstacle OB is in the monitor region MA. Then, the obstacle detector 22 outputs the determination in binary form to the obstacle determiner 21b.

The indicator detector 23 is a detector that includes a sensor mounted on the self-movable carriage 1 and separate from the laser scanners RS1 to RS3. The indicator detector 23 detects an indicator arranged in the travel region of the self-movable carriage 1 along the travel path of the self-movable carriage 1. Then, the indicator detector 23 outputs a detection result to the direction distance controller 21db. A non-limiting example of the indicator is a plate with a light reflecting material on the surface. The indicator is attached to a wall or any other surface along the travel path of the self-movable carriage 1.

Thus, a sensor separate from the laser scanners RS1 to RS3, which detect obstacles, is provided to detect the indicator. This configuration facilitates the control of obstacle detection and the control of indicator detection.

Based on the monitor region information 24a, the monitor region setter 21a gives an instruction to the obstacle detector 22. A non-limiting example of the instruction is an instruction for initial setting of the monitor region MA at the time of initial activation of the self-movable carriage 1.

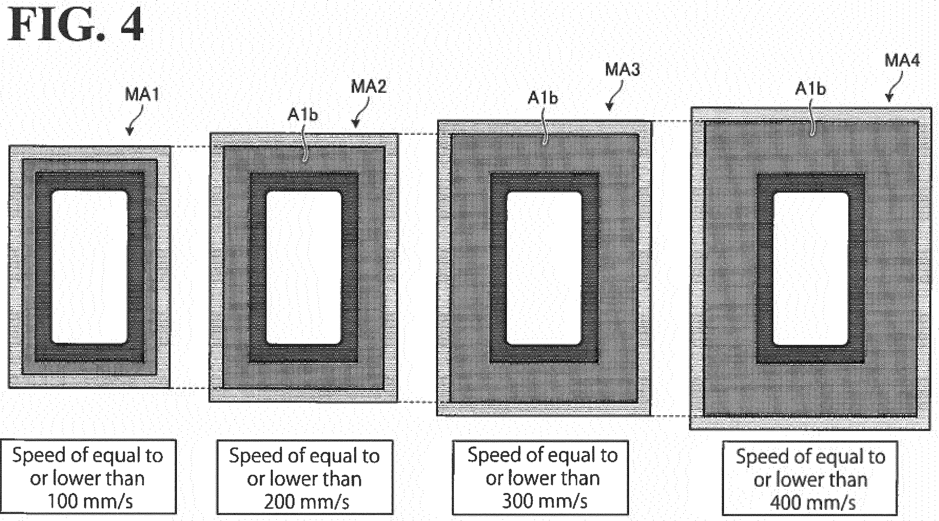

A non-limiting example of the monitor region information 24a will be described by referring to FIG. 4. FIG. 4 illustrates an example of the monitor region information 24a. In the monitor region information 24a, one set of the monitor region MA is defined as a combination of the stopping region A1a, the deceleration region A1b (A1a and A1b constitute the first region A1), and the maintaining region A2 (second region A2). In the monitor region information 24a, a plurality of sets of the monitor region MA are registered in advance. Each of the plurality of sets of the monitor region MA is different from other sets of the plurality of sets of the monitor region MA at least in size of the monitor region MA.

For example, as illustrated in FIG. 4, information on four sets, namely, monitor regions MA1 to MA4 is registered in the monitor region information 24a. The monitor regions MA1 to MA4 are provided in advance in the following non-limiting size relationship: the monitor region MA1 < the monitor region MA2 < the monitor region MA3 < the monitor region MA4.

In the embodiment illustrated in FIG. 4, the deceleration region A1b of each of the monitor regions MA2 to MA4 has approximately the same size as the size of the monitor region MA one level smaller.

Also as illustrated in FIG. 4, the monitor regions MA1 to MA4 in the monitor region information 24a are each correlated with information on speed control of the self-movable carriage 1. Specifically, in the embodiment illustrated in FIG. 4, the monitor region MA1 is correlated with "Speed of equal to or lower than 100 mm/s". That is, when the self-movable carriage 1 travels with the monitor region MA1 set, the speed of the self-movable carriage 1 is controlled at a "speed of equal to or lower than 100 mm/s".

The monitor region MA2 is correlated with "Speed of equal to or lower than 200 mm/s". The monitor region MA3 is correlated with "Speed of equal to or lower than 300 mm/s". The monitor region MA4 is correlated with "Speed of equal to or lower than 400 mm/s".

Referring back to FIG. 3, the obstacle determiner 21b will be described. Based on the determination output from the obstacle detector 22, the obstacle determiner 21b determines whether the obstacle OB is in the stopping region A1a, determines whether the obstacle OB is in the deceleration region A1b, and determines whether the obstacle OB is in the maintaining region A2. Then, the obstacle determiner 21b notifies its determination to the monitor region changer 21 c and the speed controller 21 da.

Based on the determination from the obstacle determiner 21b and based on the monitor region information 24a, the monitor region changer 21c instructs the obstacle detector 22 to change the size of the monitor region MA. Based on the determination from the obstacle determiner 21b and based on the monitor region information 24a, the speed controller 21da controls the speed of the self-movable carriage 1.

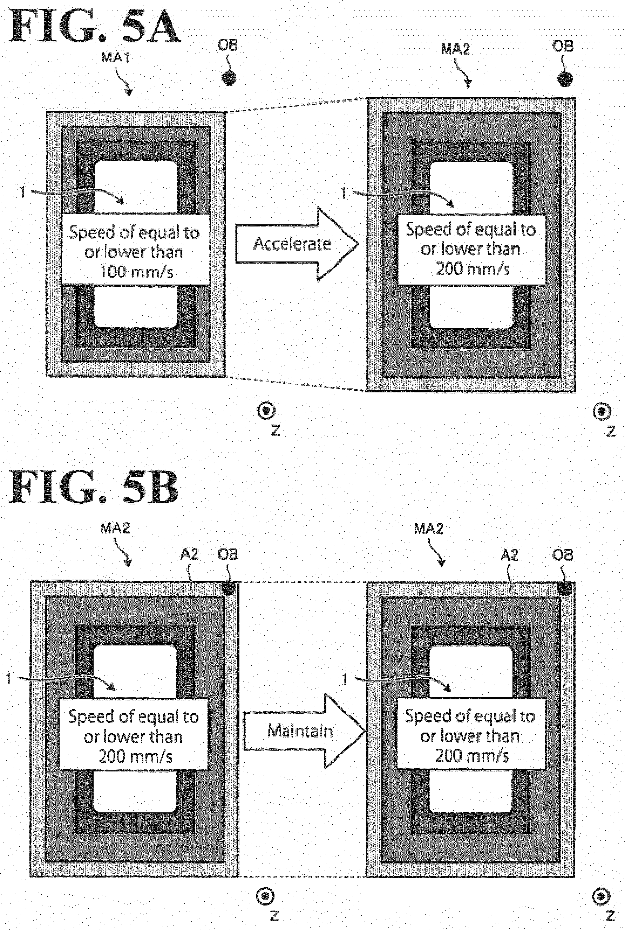

By referring to FIGs. 5A to 5D, description will be made in detail with regard to size change of the monitor region MA and with regard to speed control based on the determination of the obstacle determiner 21b. FIGs. 5A to 5D are first to fourth illustrations of size change of the monitor region MA and speed control. The following description by referring to FIGs. 5A to 5D is under the assumption that size change of the monitor region MA and speed control are performed based on the monitor region information 24a illustrated in FIG. 4.

First, as represented by the left picture of FIG. 5A, the monitor region MA1 is an initially set monitor region M, and the speed of the self-movable carriage 1 is controlled at a speed of equal to or less than 100 mm/s. In this control, when the obstacle determiner 21 b determines that no obstacle OB is in the monitor region MA1, the speed controller 21da accelerates the self-movable carriage 1 to control its speed at equal to or less than 200 mm/s as represented by the right picture of FIG. 5A.

When the self-movable carriage 1 is accelerated, the monitor region changer 21c instructs the obstacle detector 22 to enlarge the monitor region MA from the monitor region MA1 to the monitor region MA2. The acceleration of the self-movable carriage 1 and the enlargement of the monitor region MA may be repeated, enlarging the monitor region MA2 to the monitor region MA3 or enlarging the monitor region MA3 to the monitor region MA4, until the obstacle OB enters the monitor region MA.

Thus, when no obstacle OB is in the monitor region MA, the self-movable carriage 1 is accelerated and thus the monitor region MA is enlarged. This configuration contributes to the shortening of the tact time while keeping the self-movable carriage 1 moving at speeds that accord with the surrounding environment.

Next, as represented by the left picture of FIG. 5B, the monitor region MA has been changed to the monitor region MA2, and the speed of the self-movable carriage 1 is controlled at a speed of equal to or less than 200 mm/s. In this control, when the obstacle determiner 21b determines that the obstacle OB is in the maintaining region A2, the speed controller 21da maintains the speed of the self-movable carriage 1 as represented by the right picture of FIG. 5B. When the speed of the self-movable carriage 1 is maintained, the monitor region changer 21c maintains the monitor region MA at the monitor region MA2.

Thus, the speed of the self-movable carriage 1 and the size of the monitor region MA are maintained. This configuration eliminates or minimizes chattering-like fluctuation of the speed of the self-movable carriage 1, that is, repeated acceleration and deceleration. This, in turn, ensures stable travel of the self-movable carriage 1,

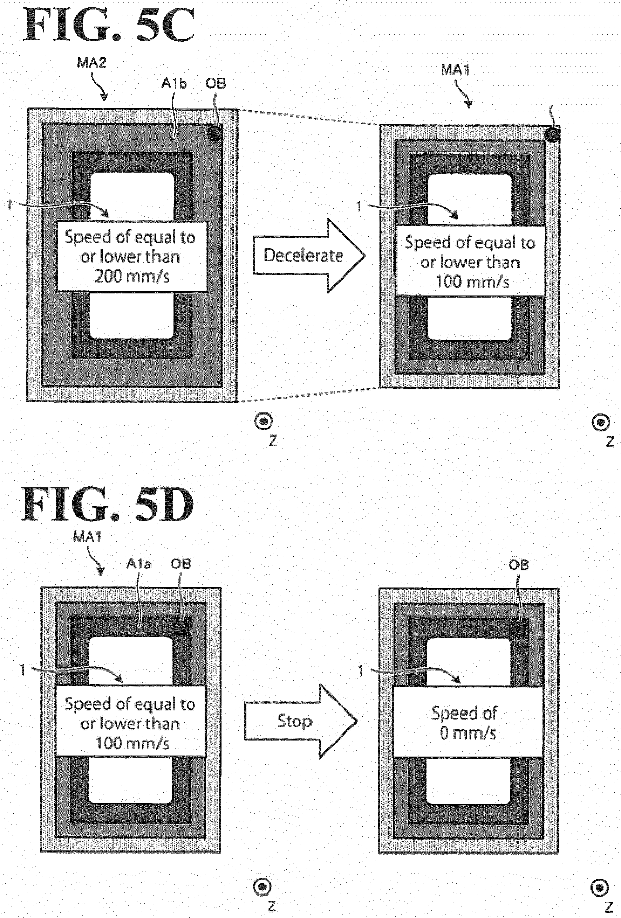

Next, as represented by the left picture of FIG. 5C, in the state of the monitor region MA2 being set, the speed of the self-movable carriage I is controlled at a speed of equal to or less than 200 mm/s. In this control, when the obstacle determiner 21 b determines that the obstacle OB is in the deceleration region A1b, the speed controller 21da decelerates the self-movable carriage 1 to control its speed at equal to or less than 100 mm/s as represented by the right picture of FIG. 5C.

When the self-movable carriage 1 is decelerated, the monitor region changer 21c instructs the obstacle detector 22 to diminish the monitor region MA from the monitor region MA2 to the monitor region MA1.

Thus, when the obstacle OB is in the monitor region MA, the self-movable carriage 1 is decelerated and thus the monitor region MA is diminished. This configuration eliminates or minimizes unnecessary low-speed travel of the self-movable carriage 1 at least in the monitor region MA, enabling the self-movable carriage 1 to travel at substantial speed. This configuration, as a result, contributes to the shortening of the tact time while keeping the self-movable carriage 1 moving at speeds that accord with the surrounding environment.

Next, as represented by the left picture of FIG. 5D, in the state of the monitor region MA1 being set, the speed of the self-movable carriage 1 is controlled at a speed of equal to or less than 100 mm/s. In this control, when the obstacle determiner 21 b determines that the obstacle OB is in the stopping region A1a, the speed controller 21da immediately stops the self-movable carriage 1 as represented by the right picture of FIG. 5D.

As illustrated in FIGs. 5A to 5D, the speed of the self-movable carriage 1 and the size of the monitor region MA are dynamically changed in accordance with where the obstacle OB is. This configuration ensures safety travel of the self-movable carriage 1 at optimal speeds that accord with the surrounding environment. That is, this configuration contributes to the shortening of the tact time while keeping the self-movable carriage 1 moving at speeds that accord with the surrounding environment.

Referring back to FIG. 3, the direction distance controller 21db will be described. Based on the indicator detected by the indicator detector 23, the direction distance controller 21db controls the direction in which the self-movable carriage 1 should be guided and the distance over which the self-movable carriage 1 should be guided.

The guide 21d outputs an output signal to the motion mechanism 3 so as to guide the self-movable carriage 1. The output signal includes a value for the speed control performed by the speed controller 21da and a value for the direction and distance control performed by the direction distance controller 21db. In response to the output signal received from the guide 21d, the motion mechanism 3 drives the driving devices (not illustrated) of the omni-directional wheels 3a to cause the self-movable carriage 1 to travel along the travel path specified by the indicator.

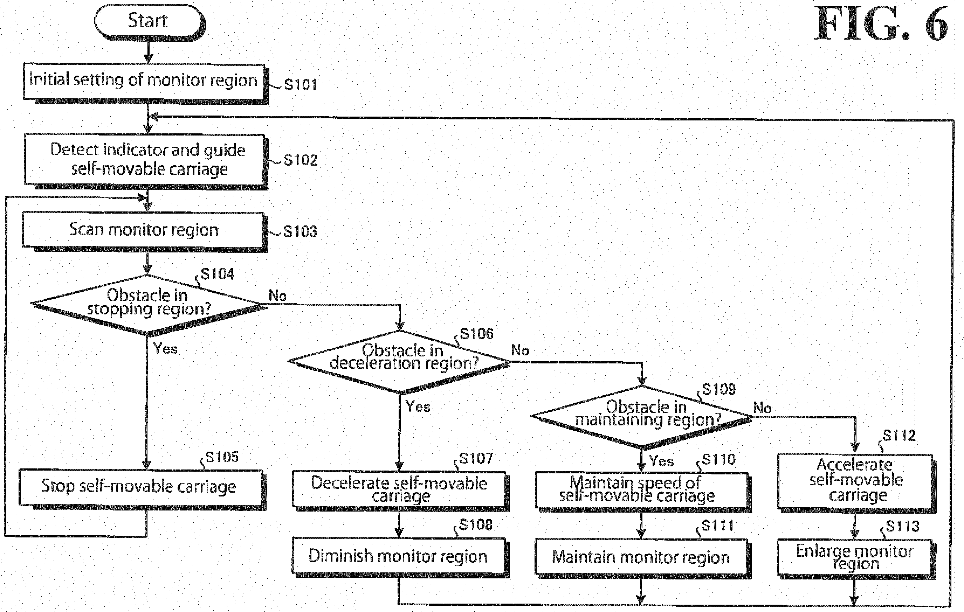

Next, a procedure for processing performed by the controller 20 according to this embodiment will be described by referring to FIG. 6. FIG. 6 is a flowchart of a procedure for processing performed by the controller 20 according to this embodiment. It is noted that FIG. 6 shows a procedure for processing performed during the time between initial activation of the self-movable carriage 1 and travel of the self-movable carriage 1 while detecting the indicator and the obstacle, and that the end of the processing is omitted.

As illustrated in FIG. 6, first, the monitor region setter 21a performs initial setting of the monitor region MA (step S101). Then, the indicator detector 23 detects an indicator, and the guide 21d guides the self-movable carriage 1 based on the detected indicator. Thus, the self-movable carriage 1 travels (step S102).

Then, during the travel of the self-movable carriage 1, the obstacle detector 22 scans the monitor region MA at predetermined time intervals, for example (step S103).

Then, based on the detection result detected by the obstacle detector 22, the obstacle determiner 21b determines whether the obstacle OB is in the stopping region A1a (step S104). When a determination is made that the obstacle OB is in the stopping region A1a (step S104, Yes), the speed controller 21da immediately stops the self-movable carriage 1 (step S105), and the processing at and later than step S103 is repeated.

When a determination is made that no obstacle OB is in the stopping region A1a (step S104, No), the obstacle determiner 21 b determines whether the obstacle OB is in the deceleration region A I b (step S106).

When a determination is made that the obstacle OB is in the deceleration region A1b (step S106, Yes), the speed controller 21da decelerates the self-movable carriage 1 (step S107) and the monitor region changer 21c reduces the size of the monitor region MA (step S108). Then, the controller 20 repeats the processing at and later than step S102.

When a determination is made that no obstacle OB is in the deceleration region A1b (step S106, No), the obstacle determiner 21 b determines whether the obstacle OB is in the maintaining region A2 (step S109).

When a determination is made that the obstacle OB is in the maintaining region A2 (step S109, Yes), the speed controller 21da maintains the speed of the self-movable carriage 1 (step S110), and the monitor region changer 21 c maintains the size of the monitor region MA (step S111). Then, the controller 20 repeats the processing at and later than step S102.

When a determination is made that no obstacle OB is in the maintaining region A2 (step S109, No), the speed controller 21da accelerates the self-movable carriage 1 (step S 112), and the monitor region changer 21 c increases the size of the monitor region MA (step S I 13). Then, the controller 20 repeats the processing at and later than step S102.

As has been described hereinbefore, the controller (movable object controller) according to this embodiment includes a speed controller and a monitor region changer (region changer). The speed controller controls the speed of the self-movable carriage (movable object) based on whether an obstacle is in the monitor region. The monitor region changer changes the size of the monitor region based on the speed of the self-movable carriage.

Thus, the controller according to this embodiment shortens the tact time while enabling the self-movable carriage to travel at speeds that accord with the surrounding environment.

While in the above-described embodiment the monitor region has been mainly described as a two-dimensional shape by referring to plan views of the self-movable carriage, the monitor region will not be limited to two-dimensional shape. Another possible embodiment is that the monitor region has a three-dimensional shape.

While in the above-described embodiment the monitor region information contains a plurality of sets of the monitor region different from each other at least in size of the monitor region, the plurality of sets of the monitor region may be different from each other in shape of the monitor region.

The monitor region will not be limited to the above-described shape surrounding the self-movable carriage. Another possible embodiment is that the self-movable carriage is capable of travelling only in the front and rear directions, and the monitor region has such a shape that covers only the front side and the rear side of the self-movable carriage.

While in the above-described embodiment the laser scanners have been described as being of binary output type, the laser scanners will not be limited to binary output type.

While in the above-described embodiment the self-movable carriage has been described as being for robot use, this should not be construed as limiting the use of the self-movable carriage. While in the above-described embodiment the robot-use self-movable carriage has been described as including a two-arm multi-articular robot to engage in handling work, the two-arm multi-articular robot should not be construed in a limiting sense. Other possible examples include a single-arm multi-articular robot and an orthogonal robot.

The movable object may not necessarily make only horizontal movements on a floor and other surfaces. Another possible embodiment is that the movable object is capable of making horizontal and vertical movements on a wall and a ceiling.

Obviously, numerous modifications and variations of the present disclosure are possible in light of the above teachings. It is therefore to be understood that within the scope of the appended claims, the present disclosure may be practiced otherwise than as specifically described herein.
- 1: Self-movable carriage
- 2: Movable portion
- 3: Motion mechanism
- 3a: Omni-directional wheel
- 4: Platform
- 5: Robot
- 20: Controller
- 21: Control section
- 21a: Monitor region setter
- 21b: Obstacle determiner
- 21c: Monitor region changer
- 21d: Guide
- 21da: Speed controller
- 21db: Direction distance controller
- 22: Obstacle detector
- 23: Indicator detector
- 24: Storage
- 24a: Monitor region information
- A1: First region
- A1a: Stopping region
- A1b: Deceleration region
- A2: Maintaining region (second region)
- MA, MA1 to MA4: Monitor region
- OB: Obstacle
- RS, RS1 to RS3: Laser scanner

## Claims

1. A movable object controller (20), **characterized by**:
a speed controller (21da) configured to control a speed of a movable object based on whether an obstacle is in a monitor region (MA); and
a region changer (21c) configured to change a size of the monitor region (MA) based on the speed of the movable object.

2. The movable object controller (20) according to claim 1,
wherein the monitor region (MA) comprises a first region (M1) and a second region (M2), the first region (M1) being closer to the movable object than second region (M2) is to the movable object,
wherein when the obstacle is in the second region (M2), the speed controller (21da) is configured to maintain the speed of the movable object, and
wherein while the speed of the movable object is maintained, the region changer (21c) is configured to maintain the size of the monitor region (MA).

3. The movable object controller (20) according to claim 2,
wherein when the obstacle is in the first region (M1), the speed controller (21da) is configured to decelerate or stop the movable object, and
wherein when the movable object is decelerated, the region changer (21c) is configured to reduce the size of the monitor region (MA).

4. The movable object controller (20) according to claim 2 or 3,
wherein when the obstacle is not in the monitor region (MA), the speed controller (21da) is configured to accelerate the movable object, and
wherein when the movable object is accelerated, the region changer (21c) is configured to increase the size of the monitor region (MA).

5. The movable object controller (20) according to claim 2, 3, or 4, further comprising:
a storage (24) configured to store information on a plurality of sets of the monitor region (MA), each set of the plurality of sets of the monitor region (MA) comprising the first region (M1) and the second region (M2) and being different from other sets of the plurality of sets of the monitor region (MA) at least in the size of the monitor region (MA); and
an obstacle detector (22) configured to form the monitor region (MA) based on the information on one set of the plurality of sets of the monitor region (MA) in response to an instruction from the region changer (21c) identifying the one set, and configured to determine whether the obstacle is in the monitor region (MA),
wherein the region changer (21c) is configured to switch, in the instruction, the one set to another set of the plurality of sets of the monitor region (MA) the obstacle detector (22) so as to change the size of the monitor region (MA).

6. The movable object controller (20) according to claim 5,
wherein the obstacle detector (22) further comprises a binary output sensor, and
wherein the movable object controller (20) further comprises a determiner (21b) configured to determine whether the obstacle is in the monitor region (MA) based on an output from the binary output sensor.

7. The movable object controller (20) according to any one of claims 2 to 6,
wherein the movable object comprises a self-movable carriage,
wherein the movable object controller (20) comprises:
an indicator detector (23) configured to detect an indicator disposed in a travel region of the self-movable carriage, and
a guide (21d) configured to guide the self-movable carriage through the travel region based on the indicator detected by the indicator detector (23).

8. The movable object controller (20) according to claim 7,
wherein the self-movable carriage comprises an omni-directional wheel (3a), and
wherein in the monitor region (MA), the first region (M1) surrounds the self-movable carriage, and the second region (M2) surrounds the first region (M1).

9. A method for controlling a movable object, **characterized by**:
controlling a speed of the movable object based on whether an obstacle is in a monitor region (MA); and
changing a size of the monitor region (MA) based on the speed of the movable object.
